# EUROPEAN PATENT SPECIFICATION

(11) **EP 2 496 395 B1**
(45) Date of publication and mention of the grant of the patent: **19.02.2014**
(21) Application number: 10779159.2
(22) Date of filing: 05.11.2010
(51) Int. Cl.: B29C 45/14

(54) **MANUFACTURING METHOD FOR SYNTHETIC RESIN HOLLOW BODY**
VERFAHREN ZUM HERSTELLEN VON HOHLKÖRPERN AUS KUNSTSTOFF
PROCEDÉE DE FABRICATION DE CORPS CREUX EN MATIÉRE PLASTIQUE

(30) Priority: 05.11.2009 US 258311 P
(43) Date of publication of application: 12.09.2012
(73) Proprietor: E. I. du Pont de Nemours and Company, Wilmington, DE 19898 (US)
(72) Inventor: COTTERLAZ, Andre Rannard, F-74800 La Roche-sur-Foron (FR); HAUSMANN, Karlheinz, CH-2012 Auvernier (CH); MILAZZO, Philippe, F-01170 Gex (FR); TINDILLIERE, Sebastien, CH-1277 Borex (CH); ZUFFEREY, Prosper, CH-1233 Bernex (CH)
(74) Representative: Heinemann, Monica
(86) International application number: PCT/US2010/055611
(87) International publication number: WO 2011/057066

(56) References cited:
- EP-A1- 0 646 447
- WO-A1-2008/010600
- JP-A- 59 142 118
- US-A- 5 258 159
- US-A- 5 699 835
- US-B1- 6 475 424

## Description

### FIELD OF THE INVENTION

The present invention relates to a method of manufacturing a synthetic resin hollow body for holding a fluid material, such as cosmetic solutions, chemicals and beverages. In particular, a hollow molding body is filled with cooled gas or cooled and pressurized gas during an overmolding step.

### BACKGROUND OF THE INVENTION

Several patents and publications are cited in this description in order to more fully describe the state of the art to which this invention pertains. The entire disclosure of each of these patents and publications is incorporated by reference herein.

Containers for holding a fluid material such as cosmetic solutions, chemicals and beverages are traditionally made of glass and, in some cases, of metal. Glass containers display exclusivity, high value and high quality look and feel. Hence, it comes as no surprise that glass containers are particularly often used as containers for cosmetic solutions such as for example perfumes.

Glass containers, however, may be easily damaged by a shock during transport or by dropping them when in use. Metal containers, while having excellent shock resistance properties on one hand, suffer from the disadvantages of being very expensive, non-transparent, heavy and particularly difficult to process. In many cases, the glass or metal containers are present in simple shapes, thereby lacking in decorative properties.

Therefore, a number of polymer based solutions to this dilemma have been proposed. Intl. Patent Appln. Publn. No. WO2008010600, for example, describes a method to manufacture a synthetic hollow resin body, in which an prefabricated hollow molding body (a) is overmolded with a synthetic resin composition. The described method allows the manufacture of polymer bottles whose wall thickness and outer shape can be freely adjusted, thereby enabling the manufacturer to create polymeric bottles having shapes that to date had only been possible for bottles made of glass.

While the method described in WO2008010600 has many advantages, it must also be acknowledged that it suffers from certain limitations. For example, when overmolding a prefabricated hollow molding body (a) with molten synthetic resin to produce the synthetic hollow resin body, a considerable fraction of the produced hollow resin bodies present defects which become apparent when visually inspecting the hollow resin body.

In one common type of defect, the hollow molding body (a) may present visually unappealing deformations, cracks and buckles. These defects are mainly caused by the molten synthetic resin used to overmold the hollow molding body (a), which heats and softens the hollow molding body (a), rendering it more malleable and prone to deformation, thereby creating an important fraction of defective bottles.

The above problems become more significant as the amount of molten synthetic resin increases, since the amount of thermal energy that may affect the hollow molding body is directly proportional to the amount of synthetic resin composition used for overmolding.

The reduction of these defects is particularly important when manufacturing synthetic hollow resin bodies having a metalized hollow molding body (a), where even very small cracks produce an easily detectable flaw in the reflecting layer of the metalized hollow molding body (a).

In a constant effort to reduce the waste stream in the manufacture of synthetic hollow resin bodies, several solutions have been proposed. U.S. Patent No. 5,942,169, for example, in an attempt to reduce deformation, breakage, damage and buckling of hollow molding body (a) in overmolding, describes a computational method that allows the calculation of the optimal distribution of injection nozzles to reduce the pressure profile on a given shape of hollow molding body (a), and also calculates the necessary wall thickness of the hollow molding body (a) to prevent deformation. This method requires the renewed computation of injection nozzle distributions and wall thicknesses for each new hollow molding body (a) shape, however small the change in shape.

European Patent No. EP646447 describes another method to reduce deformation, breakage, damage and buckling of hollow molding body (a) in an overmolding process. In order to reduce mechanical stress on the hollow molding body (a), the injection pressure of the molten synthetic resin is reduced, while at the same time the inside of the hollow molding body (a) is filled with a fluid to balance the external pressure resulting from the injection of molten synthetic resin. The right balance is not easily achieved, however, because the pressure applied to both the hollow molding body (a) and the injected resin must be carefully controlled, as insufficient or excess pressure will produce either shrunken or bloated hollow molding bodies (a).

There is a strongly felt need to provide a method to reduce the amount of defective synthetic resin hollow bodies, which does not suffer from the aforementioned disadvantages and which permits a further reduction in the amount of defective bottles.

### SUMMARY OF THE INVENTION

Accordingly, provided herein is a method of manufacturing a synthetic resin hollow body (A) in which a molten resin is injected for an over-molding outside a hollow molding body (a) made of a resin provided with a hollow body and at least an opening portion to form a resin sheathing body in an integrating manner with the hollow molding body (a), comprising the step of: injecting the molten resin for an over-molding under the state in which the hollow molding body (a) is filled with a fluid substance, wherein the gas is cooled to a temperature from 15°C to -80°C and the pressure of the gas is between 1 and 2 MPa, further wherein the molding temperature is in the range of 100 °C to 300 °C and the injection pressure is in the range of 20 to 100 MPa in the case in which the molten resin is injected and wherein the resin is an ionomer resin.

These and various other advantages and features of novelty that characterize the invention are pointed out with particularity in the claims annexed hereto and forming a part hereof. For a better understanding of the invention, its advantages, and the objects obtained by its use, however, reference should be made to the drawings which form a further part hereof, and to the accompanying descriptive matter, in which there is illustrated and described a preferred embodiment of the invention.

### BRIEF DESCRIPTION OF THE DRAWINGS

FIG. 1 depicts a synthetic resin hollow body in perspective.
FIGS. 2A, 2B, 2C, 3A and 3B depict a mold, a hollow molding body, and an overmolded hollow body in cross-section at various points in an overmolding process according to the invention.

### DETAILED DESCRIPTION OF THE INVENTION

The method described herein is characterized in that it enables the person skilled in the art to produce a synthetic hollow resin body in a manner that reduces the fraction of defective bottles, vis-à-vis the state of the art, thereby rendering the production of these synthetic hollow resin bodies more efficient.

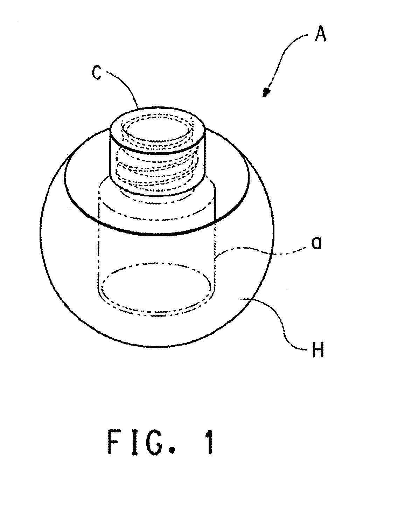

Referring now to the drawings, wherein like reference letters and numerals designate corresponding structure throughout the views, and referring in particular to FIG. 1, the synthetic resin hollow bodies (A) obtainable by the method of the present invention comprise a hollow molding body (a), wherein the external surface of the hollow molding body (a) is at least partially covered by a resin sheathing body (H), as shown in Figure 1.

The hollow molding body suitable for use in the present invention is characterized in that the hollow molding body (a) has at least one opening portion.

The hollow molding body (a) and the resin sheathing body (H) may have any desirable shape or structure, such as for example cylindrical, polyhedral or spherical. They may be concave or convex, their lines may be continuous, discontinuous, angular or curvilinear. The hollow molding body (a) and the resin sheathing body (H) may have other complex shapes or structures, or they may have a combination of two or more shapes or structures. The resin sheathing body (H) takes the hollow molding body (a) as its foundation. In other respects, however, the shape of the hollow molding body (a) is independent from the shape of the resin sheathing body (H) and independent from the shape of the synthetic hollow resin body (A).

### Hollow molding body (a) materials

Any polymeric material can be used for the hollow molding body (a). The material may be a thermoset material. Thermoplastic materials can also be used, for example, a polyolefin resin, polyolefin resin (such as polyethylene, polypropylene), polyester (such as PET (polyethylene terephthalate), copolyesters (such as PETG (polyethylene terephthalate glycol), PEGT, PCT (polycyclohexane dimethyl naphthalate), PCTA (polycyclohexanedimethanol terephtalate), and PEN (polyethylene naphthalate)), acrylic resin, styrene resin (such as a styrene acrylonitrile copolymer resin, styrene methyl methacrylate copolymer resin) cycloolefin polymer, polycarbonate, polyamide, fluoropolymer, fluoroelastomers, ionomer resin, and PAN (polyacrylonitride).

Preferred are materials having an index of refraction that is similar to the index of refraction of the resin sheathing body (H). In the context of the present disclosure, similar indices of refraction are indices of refraction that differ by no more than 10% relative to their numerical values. More preferably, the indices of refraction differ by no more than 7.5%, 5%, 2.5% or 1%. In the case in which a material the same as that of the resin sheathing body (H) is used, an optimal effect can be obtained, thereby improving the high quality sense, the appearance property, and the aesthetic appreciation.

In the case in which the fluid material that is held in the synthetic hollow resin body (A) is an aggressive chemical, it is advantageous to use fluoropolymer, polyethylene or polypropylene as materials for the hollow molding body (a). These materials have excellent chemical resistance and are highly transparent synthetic resins.

The excellent transparency thereof has an optimal effect with the resin sheathing body (H), thereby improving the high quality sense, the appearance property, and the aesthetic appreciation, while at the same time exhibiting an excellent chemical resistance.

Preferably, the polymeric material that can be used for the hollow molding body (a) is polypropylene.

As another improvement, it is possible and preferred to use a hollow molding body (a) that consists of a several layers, such as for example an inner barrier layer, an optional adhesive layer and an outer layer.

In the case where the hollow molding body (a) consists of several layers, the inner barrier layer that faces the cosmetic solutions, chemicals and beverages can be chosen in accordance with the chemical nature of the cosmetic solutions, chemicals and beverage as described above.

Preferably, the inner barrier layer can be made from polypropylene, polyethylene or fluoropolymer, as the transparency thereof adds to the high quality sense, the appearance property, and the aesthetic appreciation.

When the contents of the synthetic hollow resin body (A) are sensitive to oxygen, it is preferred that the hollow molding body (a) comprise or be made from a material that has the property of acting as a barrier to oxygen. In the case where the hollow molding body (a) consists of several layers, an additional oxygen barrier layer can be inserted between the inner barrier layer that faces the cosmetic solutions, chemicals and beverages and the optional adhesive layer and the outer layer. Thus, the oxygen barrier layer need not be in contact with the contents of the synthetic hollow resin body (A). The oxygen layer can made be from any oxygen impermeable material, such as polyvinylidene chloride, ethylene vinyl alcohol, polyethylene naphthalate (PEN) and/or combinations thereof. Preferably, the additional oxygen barrier layer can be made from copolymers of ethylene and vinyl alcohol (EVOH). Inorganic fillers that are known to improve gas barrier properties may also be present in the oxygen barrier layer. See, for example, U.S. Patent No. 7,303,797.

### Hollow molding body (a) manufacture

The manufacturing method of a synthetic resin hollow body (A) in accordance with the present invention is characterized in that the hollow molding body (a) is preferably formed by blow molding, extrusion blow molding, injection blow molding, injection molding or a method of welding two divided molding bodies using a vibration welding method.

More preferably, the hollow molding bodies (a) according to the present invention are manufactured by extrusion blow molding.

### Outer sheathing materials

Any of the polymeric materials mentioned above in connection with the hollow molding body (a) is suitable for use as an outer sheathing material. When a thermoset overmolding material is used, clearly a suitable curing step is also included in the methods described herein.

In order to manufacture a synthetic resin hollow body (A), it is preferable to use a highly transparent synthetic resin as a material of the resin sheathing body (H). It is more preferable to use a synthetic resin having a total ray transmittance (conforming to JIS K7105, and measured with a sheet having a thickness of 1 mm) in the range of 80% to 100%, more preferably in the range of 85% to 100%. Also preferably, as noted above, the index of refraction of the overmolding material is similar to that of the hollow molding body (a).

Materials that are highly transparent synthetic resins and that satisfy the above range of a transmittance include, without limitation, an ionomer resin, an acrylic resin, a polyester resin, and styrene resins (such as a styrene acrylonitrile copolymer resin and a styrene methylmethacrylate copolymer resin). Preferably, a polyester resin or ionomer resin can be used. More preferably, an ionomer resin can be used.

As an ionomer resin, an ethylene unsaturated carboxylic acid copolymer containing unsaturated carboxylic acid of 1 to 40 wt% can be used. for example.

At least part (generally more than 0 mol% and up to 99 mol%, preferably up to 90 mol%) of the carboxyl groups are neutralized to form carboxylate groups having cations as counterions.

An ethylene unsaturated carboxylic acid copolymer that is a base polymer of an ionomer resin can be obtained by copolymerizing ethylene, and unsaturated carboxylic acid, and optionally any other polar monomers. As unsaturated carboxylic acid, acrylic acid, methacrylic acid, fumaric acid, maleic acid, anhydrous maleic acid, monomethyl maleate, and monoethyl maleate can be mentioned. Preferably, the unsaturated carboxylic acid is methacrylic acid or acrylic acid.

As a polar monomer that optionally can be a copolymer component, vinyl esters such as vinyl acetate and vinyl propionate, unsaturated carboxylic acid esters such as methyl acrylate, ethyl acrylate, isopropyl acrylate, n-butyl acrylate, isobutyl acrylate, n-hexyl acrylate, iso-octyl acrylate, methyl methacrylate, dimethyl maleate, and diethyl maleate, and carbon monoxide can be mentioned. Alkyl esters of unsaturated carboxylic acids are preferred optional copolymer components.

The counterion is a cation having monovalence, bivalence, or trivalence. Any cation that is stable under polymer processing conditions is suitable, such as ammonium cations and metal cations, for example. Monovalent and divalent metal cations are preferred. More specifically, there can be mentioned Na+, K+, Li+, Cs+, Ag+, Hg+, Cu+, Be++ , Mg++ , Ca++ , Sr++, Ba++, Cu++ , Cd++ , Hg++ , Sn++ , Pb++, Fe++ , Co++ , Ni++, Zn++ , Al+++, Sc+++ , Fe+++ , and Y+++. Preferably, the metal ions are Na+, Zn++, K+, and Li+ ions. Most preferably, the metal ion is Na+ or Zn++.

The ionomeric materials described above have excellent transparency, shock resistance, and mar-proof properties. In addition, it is possible to produce a thick-walled resin sheathing body (H) that confers a sense of luxury similar to that of glass. Consequently, these materials are preferred for a material of the resin sheathing body (H). In the present invention, it is preferable that a thickness of the resin sheathing body (H) is at least 1 mm.

The outer sheathing materials may also contain additives that are consistent with the desired physical and optical properties of the synthetic resin hollow body (A). For example, the outer sheathing materials may contain pigments; dyes; additives for optical effects, such as nacreous fillers or metal flake; fillers; mold release agents; processing aides; flow enhancing additives, flow reducing additives (e.g., organic peroxides); lubricants; optical brighteners; flame retardants; impact modifiers; nucleating agents; thermal stabilizers; hindered amine light stabilizers (HALS); UV absorbers; UV stabilizers; dispersants; surfactants; chelating agents; and the like, and combinations of two or more conventional additives. These additives are described in the Kirk Othmer Encyclopedia of Chemical Technology, 5th Edition, John Wiley & Sons (New Jersey, 2004), for example.

The additives may be present in the outer sheathing materials in quantities of about 0.01 to about 15 wt%, or about 0.01 to about 10 wt%, based on the total weight of the outer sheathing material, so long as they do not significantly adversely affect the performance of the resin sheathing bodies (H) or of the synthetic resin hollow bodies (A) prepared from the outer sheathing material.

### Overmolding process

The method described herein is characterized in that it enables the person skilled in the art to produce a synthetic hollow resin body (A) in a manner that reduces the fraction of defective bottles, vis-à-vis the state of the art, thereby rendering the production of these synthetic hollow resin bodies more efficient. Defective bottles are bottles that have defects in the hollow molding body (a), such as indentations, cracks, bumps, bulges, holes, decolorations and other deformations; or defects such as air bubbles, cavities, decolorations in the resin sheathing body (H); or defects in both the hollow molding body (a) and the resin sheathing body (H).

A manufacturing method of a synthetic resin hollow body (A) in which a molten resin is injected for an over-molding outside a hollow molding body (a), made of a resin and provided with at least an opening portion, to form a resin sheathing body (H) in an integrating manner with the hollow molding body (a) in accordance with the present invention, is characterized by comprising the step of injecting the molten resin for an over-molding under the state in which the hollow molding body (a) is partially or wholly filled with a cooled fluid substance.

By such a configuration, the hollow molding body (a) can be prevented from being deformed by a resin pressure and temperature in molding, thereby manufacturing the synthetic resin hollow body (A) in which an external surface of the hollow molding body (a) is reliably covered by the resin sheathing body (H) in an integrating manner.

The manufacturing method of a synthetic resin hollow body (A) in accordance with the present invention is characterized in that the cooled fluid substance is preferably a gas, such as air, nitrogen, oxygen, inert gas, or carbon dioxide. More preferably, the gas is nitrogen or air. Still more preferably, the gas is air.

The manufacturing method of a synthetic resin hollow body (A) in accordance with the present invention is characterized in that the gas is preferably cooled to a temperature lower than the ambient temperature, preferably between 15°C and -80°C. More preferably the gas is cooled to a temperature between 0°C and -60°C. Still more preferably, the gas is cooled to a temperature between -20°C and -50°C.

The gas is preferably cooled before it is injected in the process; it is possible, however, that in the event of increased pressure additional cooling will occur due to expansion of the gas into the hollow body.

By adjusting the gas temperature in the hollow molding body (a) in the injection process of the molten resin and in the cooling of the molten resin as described above, the hollow molding body (a) can be prevented from being deformed by the injection pressure and heat in the injection process, and distortion and cracking can be reliably prevented from being generated between the hollow molding body (a) and the resin sheathing body (H) during cooling.

The manufacturing method of a synthetic resin hollow body (A) in accordance with the present invention is characterized in that the cooled gas is preferably under a pressure between 1 and 2 MPa. More preferably the cooled gas is under a pressure between 1.1 and 1.6 MPa. Still more preferably, the gas is under a pressure between 1.3 and 1.5 MPa.

By adjusting the gas pressure in the hollow molding body (a) in the injection process of the molten resin and in a cooling of the molten resin as described above, the hollow molding body (a) can be prevented from being deformed by the injection pressure in the injection process, and distortion and cracking can be reliably prevented from being generated between the hollow molding body (a) and the resin sheathing body (H) during cooling.

The manufacturing method of a synthetic resin hollow body (A) in accordance with the present invention is characterized in that the cooled gas flows through the hollow molding body (a). The flow is enabled by at least one vent of the blow pin assembly (P) used to insert air into the hollow molding body (a).

The manufacturing method of a synthetic resin hollow body (A) in accordance with the present invention is characterized in that the cooled gas flow is in the range of 300 to 1000 liters per minute. Preferably, the cooled gas flow is in the range of 350 to 600 liters per minute.

The manufacturing method of a synthetic resin hollow body (A) in accordance with the present invention is characterized in that a pressure of the gas in the hollow molding body (a) is preferably equal to atmospheric pressure in a period immediately prior to the opening of the mold.

By adjusting the gas pressure in the range as described above, the synthetic resin hollow body (A) can be reliably prevented from being blown apart when the mold opens to release the still soft synthetic resin hollow body (A).

As described above, since the fluid substance to be filled in the hollow molding body (a) is a gas, the synthetic resin hollow body (A) can be a product for a market immediately after the over-molding, thereby further improving productivity as compared with the case in which the fluid substance is a liquid, where a drying or cleaning step is otherwise required.

The manufacturing method of a synthetic resin hollow body (A) in accordance with the present invention is characterized in that the molten synthetic resin forming the resin sheathing body (H) has a temperature in the range of 100°C to 300°C and an injection pressure in the range of 20 to 100 MPa, from the moment it is injected into the mold until the moment the mold is filled.

The manufacturing method of a synthetic resin hollow body (A) in accordance with the present invention is characterized in that the molten synthetic resin to be injected into the metal mold is preferably an ionomer resin.

By using such a synthetic resin for a molding as described above, the hollow molding body (a) is clearly visible through the resin sheathing body (H). In addition, the resin sheathing body (H) has an extremely high transparency, thereby greatly improving the high quality sense, the aesthetic appreciation, and the appearance property.

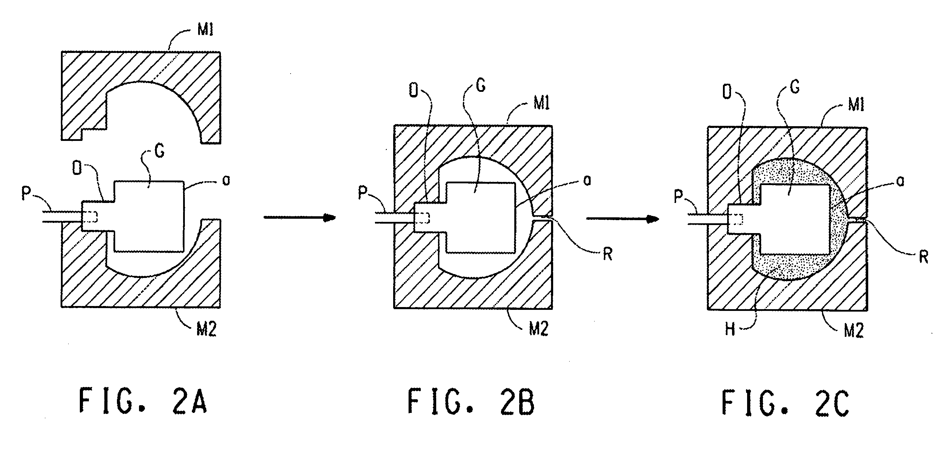

According to the manufacturing method of the synthetic resin hollow body (A), as shown in FIG. 2A, a hollow molding body (a) in an empty state is set in the metal molds M1 and M2, and the cooled gas G is made to blow via the blow pin assemply (P) into an opening portion O of the hollow molding body (a).

As shown in Fig. 2B, the metal molds M1 and M2 are then closed while the cooled gas G is made to blow into the hollow molding body (a).

As shown in Fig. 2C, a molten synthetic resin is injected into the metal molds M1 and M2 via a resin inflow port R while the cooled gas G is made to blow into the hollow molding body (a). By such a process, the molten synthetic resin covers at least a portion of the hollow molding body (a).

The molten synthetic resin is cooled and hardened by maintaining the closed mold state for a certain time.

Thus, a resin sheathing body (H) can be formed in such a manner that an external surface of the hollow molding body (a) is covered in an integrating manner with the resin sheathing body (H) without a distortion generated between the hollow molding body (a) and the resin sheathing body (H).

During the cooling and the hardening of the molten synthetic resin, a cooled gas G is made to blow in the hollow molding body (a) at a flow rate, temperature and pressure that may be maintained at the same levels that were used during the injection, or that may be increased or decreased. For example, the gas's temperature may be raised, or its pressure and flow rate may be lowered, as the resin sheathing body (H) cools and hardens.

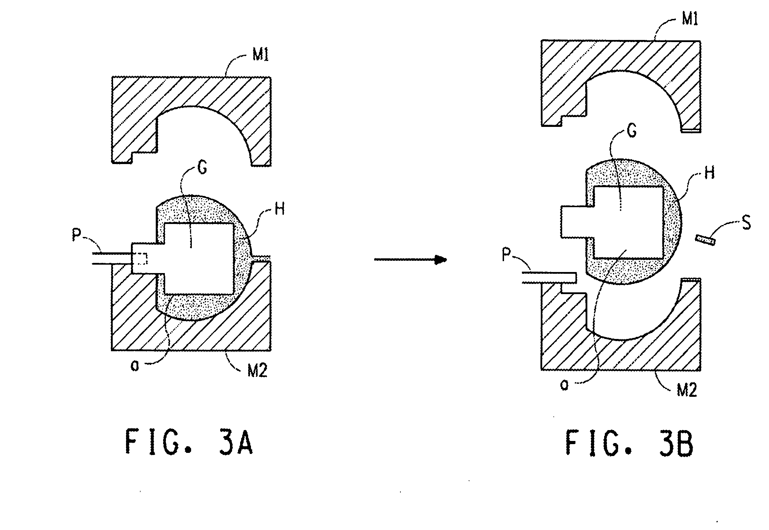

As shown in Fig. 3A, the metal molds M1 and M2 are then opened. As shown in Fig. 3B, a runner and a sprue (S) are detached, and a cap member (C) (depicted in FIG. 1) can be attached to the opening portion O. As a result, the synthetic resin hollow body (A) in which the resin sheathing body (H) is formed in an integrating manner with the hollow molding body (a) can be obtained.

After being released from the mold, the synthetic resin hollow body (A) is cooled to an acceptable temperature by conventional means, such as, for example, by resting in air under ambient conditions. Other means to cool the synthetic resin hollow body (A) may be used, however, such as cooling baths and refrigeration, with the proviso that too high a rate of cooling may introduce stress fractures or other flaws into the synthetic resin hollow body (A).

Because a gas, rather than a liquid or a solid, such as sand, has been made to blow in the hollow molding body (a) during the overmolding step, no additional cleaning or drying steps are necessary. Consequently, the hollow molding body (a) may be filled with the desired cosmetic solutions, chemicals and beverages immediately after the synthetic resin hollow body (A) has been molded and cooled to an appropriate temperature, thereby further reducing the manufacturing cost.

By forming the hollow molding body (a) by such a method as described above, a mass production is possible and a manufacturing cost can be reduced, thereby also enabling a fabrication process for the synthetic resin hollow body (A) in which an external surface of the hollow molding body (a) is covered by the resin sheathing body (H) in an integrating manner at an economic advantage.

The manufacturing method of a synthetic resin hollow body (A) in accordance with the present invention is characterized in that the hollow molding body (a) is a thin-walled molding body preferably.

As described above, since the hollow molding body (a) is a thin-walled molding body, in the case in which the hollow molding body (a) is integrated with the resin sheathing body (H), the boundary line between the both members is hardly visible, thereby obtaining the synthetic resin hollow body (A) having an improved aesthetic appreciation.

The Examples below are provided to describe the invention in further detail. These Examples, which set forth a preferred mode presently contemplated for carrying out the invention, are intended to illustrate and not to limit the invention.

### EXAMPLES

### Hollow molding bodies

A hollow molding body having three layers was formed by coextrusion blow molding.

The innermost layer consisted of random polypropylene (PP Atofina 3221) having a thickness of 0.5 mm and was coextruded at a temperature of 200 °C.

The middle adhesive layer consisted of an anhydride-modified ethylene vinyl acetate (Bynel 3861) having a thickness of 0.2 mm and was coextruded at a temperature of 200 °C.

The outer layer consisted of PETG having a thickness of 0.8mm and was coextruded at a temperature of 220 °C.

The coextruded hollow molding body parison was cut off by the closing of a cooled metal mold. A pressurized fluid was inserted into the enclosed parison via a blowing pin, thus expanding the parison to the dimensions of the mold.

The fluid used was ambient air having room temperature (25°C) and having a pressure of 0.8 MPa. After cooling in the mold for 30 seconds, the finished hollow molding body was ejected.

### Example 1 (reference example, not part of the invention)

The thus obtained hollow molding body was then placed into a mold attached to an Netstal Synergy 1750 injection molding machine to be overmolded with ionomer. The ionomer was a copolymer of ethylene and methacrylic acid containing 19 wt% of partially sodium neutralized methacrylic acid, and having an melt flow index of 4.5 g/10min measured according to ASTM 1238 at 190°C using a weight of 2.16 kg. Similar ionomers are available commercially under the Surlyn® trademark from E. I. du Pont de Nemours & Company, Wilmington, DE, U.S.A.

Prior to injection of the ionomer, the hollow molding body was precooled for 5 seconds by circulating cooled air through it and the mold that was closed around it. The air was chilled to about -14°C and pressurized to about 1.2 MPa.

The molten ionomer resin was then injected into the mold containing the hollow molding body to overmold the hollow molding body. The injection pressure of ionomer resin was about 80 MPa until the mold was filled. Once the mold was filled, the pressure of the ionomer resin was lowered to 30 MPa and the ionomer resin was allowed to solidify in the mold for 110 seconds.

During injection and solidification, the chilled air was circulated through the hollow molding body at a pressure of 0.6 MPa.

After solidification of the ionomer resin, the overmolded hollow molding body was ejected from the overmolding machine and its quality assessed. The quality scale was assessed in three distinct levels, with 1 being the worst, 3 being the best quality.

| **Quality Level** | 1 | 2 | 3 |
|---|---|---|---|
| **Defects** | Hollow molding body defects + Resin sheathing body defect | Hollow molding body defects | No defects |

### Example 2 (reference example, does not form part of the invention)

The hollow molding body used was formed according to the experimental procedure outlined above. The overmolding step was performed as described in example 1, except that the cooled air was used at a pressure of 0.8 MPa.

### Example 3

The hollow molding body used was formed according to the experimental procedure outlined above. The overmolding step was performed as described in example 1, except that the cooled air was used at a pressure of 1MPa.

### Example 4

The hollow molding body used was formed according to the experimental procedure outlined above. The overmolding step was performed as described in example 1, except that the cooled air was used at a pressure of 1.2 MPa.

### Comparative example 1

The hollow molding body used was formed according to the experimental procedure outlined above.

The overmolding step was performed as described in example 1, except that the air used was at room temperature (25°C).

### Comparative example 2

The hollow molding body used was formed according to the experimental procedure outlined above.

The overmolding step was performed as described in example 2, except that the air used was at room temperature (25°C).

### Comparative example 3

The hollow molding body used was used were formed according to the experimental procedure outlined above.

The overmolding step was performed as described in example 3, except that the air used was at room temperature (25°C).

### Comparative example 4

The hollow molding body used was formed according to the experimental procedure outlined above.

The overmolding step was performed as described in example 4, except that the air used was at room temperature (25°C).

### Table 1

Table 1 shows the quality assessment of the synthetic resin hollow bodies (A) manufactured according to Examples 1, 2, 3 and 4, and the corresponding comparative Examples 1, 2, 3 and 4.

**Table 1**

| Ex. No. or Comp. Ex. No. | Pressure (MPa) | Quality¹ at an air temperature of -14°C | Quality at an air temperature of 25°C |
|---|---|---|---|
| 1 | 0.6 | 1 | 1 |
| 2 | 0.8 | 1 | 1 |
| 3 | 1 | 2 | 1 |
| 4 | 1.2 | 3 | 1 |

| | | | |
|---|---|---|---|
| Note (1): The quality rating of the synthetic resin hollow bodies manufactured according to Example 1 (0.6 MPa) and Example 2 (0.8 MPa) is 1 (Defects in both hollow molding body and resin sheath), whereas the quality of the synthetic resin hollow bodies manufactured according to Example 3 (1 MPa) is 2 (Defects in hollow molding body). The quality of the synthetic resin hollow bodies manufactured according to Example 4 is 3 (no defects). The quality of the synthetic resin hollow bodies manufactured according to comparative Examples 1,2,3 and 4 is 1 (Defects in both hollow molding body and resin sheath). | | | |

As can be seen from the data in Table 1, the use of cooled air in the manufacturing method according to the invention yields better quality synthetic resin hollow bodies in comparison to a manufacturing method in which the air is not cooled. It is believed that the cold air stiffens the hollow molding body in the overmolding and thereby prevents it from being deformed, cracked or buckled. Also, when the temperature of the air is -14°C, better results are obtained when it is circulated at pressures of 1 and 1.2 MPa.

Furthermore, it is believed that the cooled air is further cooled at the moment when it exits the blow pin. Since the blow pin has vents where the cooled air can exit after flowing through the hollow molding body and the vents have greater diameter than the blow pin, there is an gas expansion of the cooled air exiting the blow pin which results in an additional cooling of the cooled air due to a decompression effect that would even lower the temperature of a gas being injected at ambient temperature.

### Examples 5 to 10

Samples were prepared according to the protocol set forth above, except that the air temperatures and pressures were as set forth in Table 2, below. The change in inner volume of the hollow molding body was assessed before and after overmolding with molten ionomer resin, and these results are also set forth in Table 2. Plainly, the hollow molding bodies inside the synthetic resin hollow bodies made with pre-cooled and pressurized air (Examples 5 to 10) maintained a nearly constant volume. In contrast, the volume of the hollow molding bodies inside the synthetic resin hollow bodies made with pressurized air that was not pre-cooled (Comparative Examples 5 to 10) was reduced by a factor of one fifth to one third.

**Table 2**

| **Example No. or Comp. Ex. No.** | **pressure in MPa** | **Volume change in %, no cooling** | **Volume change in %, air cooled to -35** |
|---|---|---|---|
| 5 | 0.6 | -35 | -2 |
| | | | |
| 6 | 0.8 | -30 | -2 |
| | | | |
| 7 | 1.0 | -26 | -2 |
| | | | |
| 8 | 1.2 | -22 | 0 |
| | | | |
| 9 | 1.4 | -20 | No data, machine limit |
| | | | |
| 10 | 1.6 | -20 | No data, machine limit |

| | | | |
|---|---|---|---|
| reference examples 5 and 6 do not form part of the invention as claimed | | | |

While certain of the preferred embodiments of the present invention have been described and specifically exemplified above, it is not intended that the invention be limited to such embodiments. Rather, it is to be understood that even though numerous characteristics and advantages of the present invention have been set forth in the foregoing description, together with details of the structure and function of the invention, the disclosure is illustrative only, and changes may be made in detail, especially in matters of shape, size and arrangement of parts within the principles of the invention to the full extent indicated by the broad general meaning of the terms in which the appended claims are expressed.

## Claims

1. A method of manufacturing a synthetic resin hollow body in which a molten resin is injected as an over-molding outside a hollow molding body provided with a hollow body and at least an opening portion to form a resin sheathing body in an integrating manner with the hollow molding body, comprising the steps of: injecting the molten resin for an over-molding under the state in which the hollow molding body (a) is filled with a gas, wherein the gas is cooled to a temperature in the range of from 15 °C to -80 °C and the pressure of the gas is between 1 and 2 MPa, further wherein the molding temperature is in the range of 100 °C to 300 °C and the injection pressure is in the range of 20 to 100 MPa in the case in which the molten resin is injected and wherein the resin is an ionomer resin.

2. The manufacturing method of the synthetic resin hollow body (A) according to claim 1, wherein the flow of the cooled gas is in the range of 300 to 1000 liters per minute.

3. The manufacturing method of the synthetic resin hollow body (A) according to any preceding claim, wherein the hollow molding body (a) is formed by a blow molding method or a method of welding two divided molding bodies using a vibration welding method.

4. The manufacturing method of the synthetic resin hollow body according to claim 1, wherein the material for the molten resin and the material for the hollow molding have indices of refraction that differ by no more than 10% relative to their numerical values.

5. The manufacturing method of the synthetic resin hollow body according to claim 4, wherein the material for the molten resin has a total ray transmittance, measured in a manner conforming to JIS K7105 on a sheet having a thickness of 1 mm, in the range of 80% to 100%.

## Patentansprüche

1. Verfahren zur Herstellung eines Hohlkörpers aus synthetischem Harz, wobei ein geschmolzenes Harz als Überzug außerhalb eines hohlen Formkörpers, der mit einem Hohlkörper und mindestens einem Öffnungsabschnitt versehen ist, gespritzt wird, um integral mit dem hohlen Formkörper einen Harz-Umhüllungskörper zu bilden, umfassend die folgenden Schritte: Spritzen des geschmolzenen Harzes als Überzug, während der hohle Formkörper (a) mit Gas gefüllt ist, wobei das Gas auf eine Temperatur im Bereich zwischen 15°C und -80°C abgekühlt wird und der Gasdruck zwischen 1 und 2 MPa liegt, wobei ferner die Schmelztemperatur im Bereich zwischen 100°C und 300°C und der Spritzdruck im Bereich zwischen 20 und 100 MPa liegt, in dem Fall, dass das geschmolzene Harz gespritzt wird und wobei das Harz ein Ionomerharz ist.

2. Herstellungsverfahren des Hohlkörpers aus synthetischem Harz (A) nach Anspruch 1, wobei der Fluss des abgekühlten Gases im Bereich zwischen 300 und 1000 Litern pro Minute liegt.

3. Herstellungsverfahren des Hohlkörpers aus synthetischem Harz (A) nach einem der vorhergehenden Ansprüche, wobei der hohle Formkörper (a) durch ein Blasformverfahren oder ein Verfahren zum Schweißen zwei getrennter Formkörper unter Anwendung eines Vibrationsschweißverfahrens gebildet wird.

4. Herstellungsverfahren des Hohlkörpers aus synthetischem Harz nach Anspruch 1, wobei das Material für das geschmolzene Harz und das Material für die hohle Form Brechungsindexe aufweisen, die um nicht mehr als 10% in Bezug auf ihre numerischen Werte abweichen.

5. Herstellungsverfahren des Hohlkörpers aus synthetischem Harz nach Anspruch 4, wobei das Material für das geschmolzene Harz eine Gesamtstrahlendurchlässigkeit in einem Bereich zwischen 80% und 100% aufweist, gemessen gemäß JIS K7105 auf einem Blatt mit einer Dicke von 1 mm.

## Revendications

1. Procédé pour la fabrication d'un corps creux en résine synthétique dans lequel une résine fondue est injectée en tant que surmoulage à l'extérieur d'un corps de moulage creux comportant un corps creux et au moins une partie d'ouverture pour former un corps d'enveloppe en résine de manière intégrale avec le corps de moulage creux, comprenant les étapes suivantes: injecter la résine fondue pour un surmoulage dans l'état dans lequel le corps creux de moulage (a) est rempli avec un gaz, le gaz étant refroidi à une température allant de 15°C à -80 °C et la pression du gaz étant entre 1 et 2 MPa, en outre la température de fusion allant de 100 °C à 300 °C et la pression d'injection allant de 20 à 100 MPa, dans le cas où la résine fondue est injectée, la résine étant une résine d'ionomère.

2. Procédé pour la fabrication du corps creux en résine synthétique (A) selon la revendication 1, dans lequel le flux du gaz refroidi se situe dans l'intervalle compris entre 300 et 1000 litres par minute.

3. Procédé pour la fabrication du corps creux en résine synthétique (A) selon l'une quelconque des revendications précédentes, le corps creux de moulage (a) étant formé par un procédé de moulage par soufflage ou un procédé de soudage de deux corps de moulage séparés en utilisant un procédé de soudage par vibration.

4. Procédé pour la fabrication du corps creux en résine synthétique selon la revendication 1, dans lequel le matériau pour la résine fondue et le matériau pour le moulage creux ont des indices de réfraction qui diffèrent de tout au plus 10 % par rapport à leurs valeurs numériques.

5. Procédé pour la fabrication du corps creux en résine synthétique selon la revendication 4, dans lequel le matériau pour la résine fondue a une transmission totale des rayonnements, mesurée d'une manière conforme à JIS K7105 sur une feuille ayant une épaisseur de 1 mm, allant de 80% à 100%.
